# EUROPEAN PATENT APPLICATION

(11) **EP 4 730 590 A1**
(43) Date of publication of application: **22.04.2026**
(21) Application number: 25209044.4
(22) Date of filing: 16.10.2025
(51) Int. Cl.: H02J 4/20, H02M 1/32, H02J 3/38

(54) **POWER SUPPLY SYSTEM**

(30) Priority: 18.10.2024 CN 202411467958
(71) Applicant: Huawei Digital Power Technologies Co., Ltd., Shenzhen, Guangdong 518043 (CN)
(72) Inventor: Huo, Yuxiang, Shenzhen, 518043 (CN); Gu, Guilei, Shenzhen, 518043 (CN)
(74) Representative: Gill Jennings & Every LLP

(57) **Abstract**

Embodiments of this application provide a power supply system. The power supply system includes an inverter and a plurality of optimizers. An output end of the optimizer is connected to an output terminal, and an input end of the optimizer is configured to connect to at least one photovoltaic module. An input end of the inverter is connected to a plurality of input terminals, and the input terminal is connected to the output terminal. The plurality of optimizers include a plurality of first optimizers, and the plurality of first optimizers are connected in series and then connected to a target input terminal in the plurality of input terminals. When a temperature of the output terminal connected to any one of the plurality of first optimizers is greater than or equal to a temperature threshold, or when a temperature of the target input terminal is greater than or equal to the temperature threshold, currents transmitted by the plurality of first optimizers to the inverter are reduced.

## Description

### TECHNICAL FIELD

This application relates to the field of power electronics, and in particular, to a power supply system.

### BACKGROUND

A wiring terminal is an apparatus for connecting wires or conductors, and can be used to fasten wires and provide electrical connections, so that currents can flow between circuits and devices. The wiring terminal is widely used in household appliances, industrial control panels, telecommunication devices, new-energy power supply systems, or other scenarios. However, when a loose connection occurs at the wiring terminal, there is a gap between contact points due to poor contact on a press-fit surface, leading to an increase in contact resistance. For a scenario including a power device, a loose connection causes an increase in a temperature of a wiring terminal. Consequently, the wiring terminal may be burnt, or there may be a fire or a short circuit of the device in severe cases. In addition, the loose connection at the wiring terminal further causes non-tight sealing at a joint. In this case, water is likely to enter the wiring terminal, causing corrosion, shortening a service life, and increasing costs for subsequent operation and maintenance. The foregoing problems caused by the loose connection at the wiring terminal affect normal operation of corresponding components and systems, and even cause severe safety faults.

### SUMMARY

Embodiments of this application provide a power supply system, so that a current on a loosely connected terminal can be reduced, and a current can flow normally between a photovoltaic module and an input end of an inverter with no loose connection at a terminal in the power supply system, avoiding an excessively high temperature of the loosely connected terminal, and reducing a loss of power generation of the power supply system.

According to a first aspect, this application provides a power supply system. The power supply system includes an inverter and a plurality of optimizers. An output end of the optimizer is connected to an output terminal, and an input end of the optimizer is configured to connect to at least one photovoltaic module. An input end of the inverter is connected to a plurality of input terminals, and the input terminal is connected to the output terminal. The plurality of optimizers include a plurality of first optimizers, and the plurality of first optimizers are connected in series and then connected to a target input terminal in the plurality of input terminals. When a temperature of the output terminal connected to any one of the plurality of first optimizers is greater than or equal to a temperature threshold, or when a temperature of the target input terminal is greater than or equal to the temperature threshold, currents transmitted by the plurality of first optimizers to the inverter are reduced. In this application, the power supply system may include a controller. When a loose connection occurs at the output terminal of any one of the plurality of first optimizers, the controller may control currents output by all the first optimizers to the inverter to be reduced, or the controller may control the inverter, for an input current on the input terminal connected between the inverter and the plurality of first optimizers to be reduced. Similarly, when a loose connection occurs at the input terminal connected to the inverter, for example, a loose connection occurs at the input terminal connected between the inverter and the plurality of first optimizers, the controller may control the inverter, for reduction of an input current on the input terminal at which the loose connection occurs, or control the plurality of first optimizers connected to the input terminal at which the loose connection occurs, for reduction of currents output by the plurality of first optimizers to the inverter. Herein, after determining that a loose connection occurs at a terminal in the power supply system, the controller controls an output current of an optimizer corresponding to the loosely connected terminal and an output current of another optimizer connected in series to an output of the optimizer to be reduced, so that a current between the optimizer corresponding to the loosely connected terminal and the input end of the inverter is reduced, thereby reducing a current on a loosely connected output terminal or input terminal. In addition, a current flows normally between the optimizer and the input end of the inverter with no loose connection at a terminal in the power supply system, avoiding an excessively high temperature of the loosely connected terminal, and reducing a loss of power generation of the power supply system, resulting in higher operation reliability of the power supply system.

In a possible implementation, the first optimizer includes a first controller, and the inverter includes a second controller. A first controller of any one of the plurality of first optimizers is configured to: when the temperature of the output terminal connected to the first optimizer is greater than or equal to the temperature threshold, send information about a loose connection at the output terminal to the second controller through power line carrier communication. The second controller is configured to: after receiving the information about the loose connection at the output terminal through power line carrier communication, control the currents transmitted by the plurality of first optimizers to the inverter to be reduced, or send an output current reduction instruction to the first controller in each of the first optimizers through power line carrier communication, for the first controller in each of the first optimizers to control, after receiving the output current reduction instruction, a current transmitted by each of the first optimizers to the inverter to be reduced. The second controller is further configured to: when the temperature of the target input terminal is greater than or equal to the temperature threshold, control the currents transmitted by the plurality of first optimizers to the inverter to be reduced. Herein, the first controller and the second controller communicate with each other through power line carrier communication. In this case, after the output terminal connected to one of the plurality of first optimizers is loosely connected, the second controller receives the information about the loose connection at the output terminal, and sends the output current reduction instruction to a first controller in another first optimizer, so that after receiving the output current reduction instruction, the first controller in each first optimizer controls a current transmitted by each first optimizer to the inverter to be reduced, thereby reducing a current on the loosely connected output terminal, and avoiding an excessively high temperature of the loosely connected terminal.

In a possible implementation, the first optimizer includes a first direct current conversion circuit. That the currents transmitted by the plurality of first optimizers to the inverter are reduced includes that: in each of the first optimizers, the first controller adjusts a switching action of a switch transistor of the first direct current conversion circuit, for the current transmitted by each of the first optimizers to the inverter to be reduced. Herein, the first controller may control the action of the switch transistor in the first direct current conversion circuit in the corresponding first optimizer, so that an output current of the first direct current conversion circuit is reduced, thereby reducing a current on the loosely connected output terminal or input terminal, and avoiding an excessively high temperature of the loosely connected terminal.

In a possible implementation, the inverter includes an inverter circuit and a plurality of second direct current conversion circuits, and output ends of the plurality of second direct current conversion circuits are connected in parallel and then connected to an input end of the inverter circuit. That the currents transmitted by the plurality of first optimizers to the inverter are reduced includes that: the second controller adjusts a switching action of a switch transistor of the second direct current conversion circuit that is in the plurality of second direct current conversion circuits and that is connected to the target input terminal, for reduction of the currents transmitted by the plurality of first optimizers to the inverter. Herein, the second controller may control the action of the switch transistor in the second direct current conversion circuit in the inverter, so that an input current of the second direct current conversion circuit is reduced, thereby reducing a current on the loosely connected output terminal or input terminal, and avoiding an excessively high temperature of the loosely connected terminal.

In a possible implementation, the optimizer includes a thermistor, and the thermistor is located at the output end of the optimizer; and when a resistance value of the thermistor reaches a target resistance value, a temperature of the output terminal connected to the optimizer is greater than or equal to the temperature threshold. Herein, the first controller is configured to: when the resistance value of the thermistor reaches the target resistance value, send the information about the loose connection at the output terminal to the second controller through power line carrier communication. The second controller receives the information about the loose connection at the output terminal, and sends the output current reduction instruction to a first controller in another first optimizer, so that after receiving the output current reduction instruction, the first controller in each first optimizer controls a current transmitted by each first optimizer to the inverter to be reduced, thereby reducing a current on the loosely connected output terminal, and avoiding an excessively high temperature of the loosely connected terminal. The thermistor has high sensitivity to temperature changes, improving accuracy of detection on the loosely connected terminal.

In a possible implementation, the inverter includes a thermistor, and the thermistor is located at the input end of the inverter. When a resistance value of the thermistor reaches a target resistance value, a temperature of the input terminal connected to the inverter is greater than or equal to the temperature threshold. Herein, the second controller is configured to: when the resistance value of the thermistor reaches the target resistance value, control currents transmitted by the plurality of first optimizers to the inverter to be reduced, or send the output current reduction instruction to the first controller in each first optimizer through power line carrier communication. The second controller receives the information about the loose connection at the output terminal, and sends the output current reduction instruction to a first controller in another first optimizer, so that after receiving the output current reduction instruction, the first controller in each first optimizer controls a current transmitted by each first optimizer to the inverter to be reduced, thereby reducing a current on the loosely connected output terminal, and avoiding an excessively high temperature of the loosely connected terminal. The thermistor has high sensitivity to temperature changes, improving accuracy of detection on the loosely connected terminal.

In a possible implementation, that the currents transmitted by the plurality of first optimizers to the inverter are reduced includes that: the currents transmitted by the plurality of first optimizers to the inverter are reduced to 0. An output current of an optimizer corresponding to the loosely connected terminal and an output current of another optimizer connected in series to an output of the optimizer are controlled to be 0, so that a current between the optimizer corresponding to the loosely connected terminal and the input end of the inverter is reduced, thereby reducing a current on a loosely connected output terminal or input terminal. In addition, a current flows normally between the optimizer and the input end of the inverter with no loose connection at a terminal in the power supply system, avoiding an excessively high temperature of the loosely connected terminal, and reducing a loss of power generation of the power supply system.

### BRIEF DESCRIPTION OF DRAWINGS

FIG. 1 is a diagram of an application scenario of a power supply system according to this application;
FIG. 2 is a diagram of another application scenario of a power supply system according to this application;
FIG. 3 is a diagram of a structure of a power supply system according to this application;
FIG. 4 is a diagram of another structure of a power supply system according to this application;
FIG. 5 is a diagram of another structure of a power supply system according to this application; and
FIG. 6 is a diagram of another structure of a power supply system according to this application.

### DESCRIPTION OF EMBODIMENTS

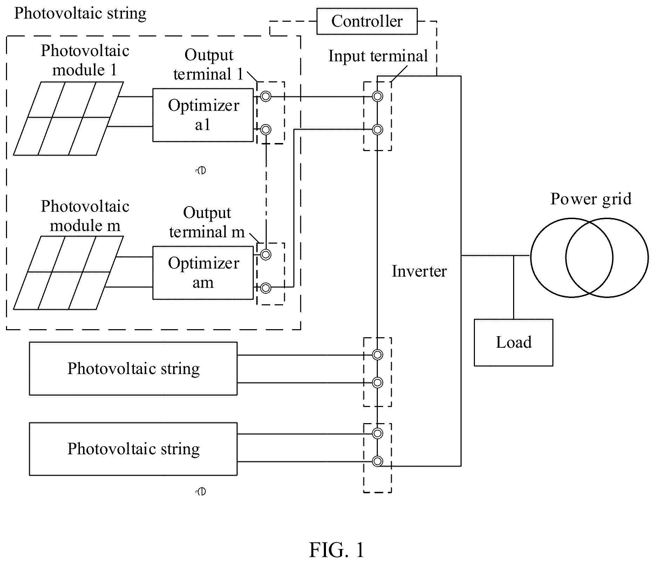

FIG. 1 is a diagram of an application scenario of a power supply system according to this application. The power supply system provided in this application may include an inverter and a plurality of photovoltaic strings. The photovoltaic string includes a plurality of optimizers, an input end of each of the plurality of optimizers is configured to connect to a photovoltaic module, and an output end of each of the plurality of optimizers is connected to an output terminal. A connection between an input end of the inverter and a plurality of input terminals may be a connection between a plurality of ports of the input end of the inverter and the plurality of input terminals. Output terminals connected to output ends of the plurality of optimizers in each photovoltaic string are connected in series and then configured to connect to one input terminal. An output end of the inverter is configured to connect to a power grid or a load. Each optimizer is configured to perform voltage transformation on a direct current from a corresponding photovoltaic module, and output the direct current to the inverter. The inverter can perform inverted conversion on direct currents provided by optimizers in the plurality of photovoltaic strings, and then output an alternating current obtained after the inverted conversion to the power grid for power supply. The output terminal and the input terminal are configured to fasten wires and provide electrical connections between the optimizers and between the optimizer and the inverter, so that a current can flow between various devices.

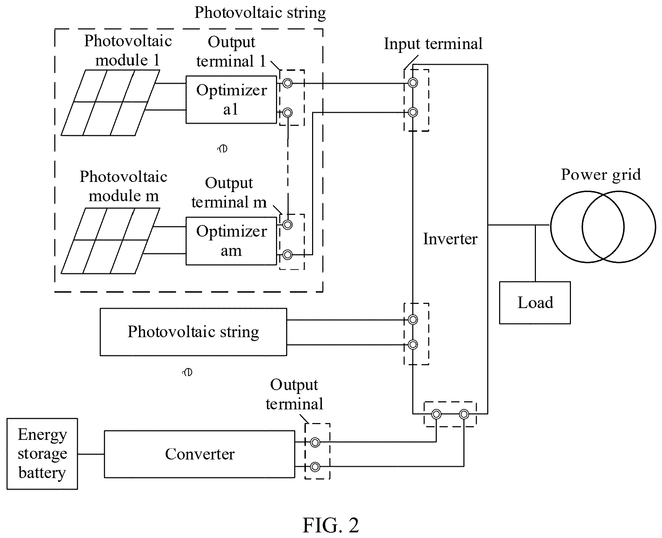

In some feasible implementations, the power supply system may further include an energy storage battery and a converter. FIG. 2 is a diagram of another application scenario of a power supply system according to this application. As shown in FIG. 2, in the power supply system, one end of a converter is configured to connect to an energy storage battery, and the other end of the converter is configured to connect to an output terminal, and is connected, by the output terminal, to the input terminal connected to the input end of the inverter. The converter is configured to perform voltage transformation on a direct current from a corresponding energy storage battery, and output the direct current to the inverter. The inverter can perform inverted conversion on a direct current provided by the converter, and then output an alternating current obtained after the inverted conversion to the power grid for power supply.

In the application scenario shown in FIG. 1 or FIG. 2, during operation of the power supply system, a loose connection may occur at the output terminal connected to the optimizer and the input terminal connected to the inverter, and a loose connection may also occur at the output terminal connected to the converter. The power supply system in FIG. 1 is used as an example. When a loose connection occurs at the output terminal or the input terminal, there is a gap between contact points due to poor contact on a press-fit surface, leading to an increase in contact resistance. When the loose connection occurs at the output terminal or the input terminal but devices in the power supply system continue to be in operation, a temperature of the loosely connected terminal increases. Consequently, the terminal may be burnt, or there may be a fire or a short circuit of the device in severe cases. In addition, the loose connection at the terminal further causes non-tight sealing at a joint. In this case, water is likely to enter the terminal, causing corrosion, shortening a service life, and increasing costs for subsequent operation and maintenance. The foregoing problems caused by the loose connection at the wiring terminal affect normal operation of corresponding components and systems, and even cause severe safety faults. For example, the power supply system in FIG. 1 is used as an example. A photovoltaic string includes m optimizers in total: an optimizer a1, an optimizer a2, ..., and an optimizer am. Ends of the optimizer a1, the optimizer a2, ..., and the optimizer am are respectively configured to connect to a photovoltaic module 1, a photovoltaic module 2, ..., and a photovoltaic module m. The other ends of the optimizer a1, the optimizer a2, ..., and the optimizer am are respectively connected to an output terminal 1, an output terminal 2, ..., and an output terminal m. During operation of the power supply system, a loose connection may occur at the output terminal connected to the optimizer and the input terminal connected to the inverter. For a power supply system including a photovoltaic string, when a loose connection occurs at a terminal, for example, a loose connection occurs at a terminal for an output end of an optimizer, the corresponding optimizer may be shut down to avoid an excessively high current at the loosely connected terminal, or an entire inverter may be shut down. For example, when a loose connection occurs at the output terminal 1 connected to the optimizer a1, the corresponding optimizer a1 is shut down to avoid an excessively high current at the loosely connected output terminal 1. However, when only the optimizer a1 connected to the loosely connected terminal is shut down, because other optimizers, that is, the optimizer a2, ..., and the optimizer am, in the same string in which the optimizer a1 is located are still in normal operation, and output ends of the optimizers in the same string are connected in series, a current flowing from the optimizer a2, ..., and the optimizer am to the loosely connected terminal is still high, and there is a risk that a temperature of the terminal further increases. However, if the inverter is shut down, an optimizer in another photovoltaic string without a loosely connected terminal cannot be in normal operation, causing a large loss of power generation.

To avoid damage to the loosely connected terminal due to overtemperature, and reduce a loss of power generation of the power supply system while protecting the loosely connected terminal, the power supply system provided in this application further includes a controller. The controller is configured to: when a temperature of an output terminal connected to any one of a plurality of first optimizers included in a first photovoltaic string in a plurality of photovoltaic strings is greater than or equal to a temperature threshold, determine that a loose connection occurs at the output terminal of the first optimizer included in the first photovoltaic string. The plurality of first optimizers are connected in series and then connected to a target input terminal in a plurality of input terminals on an inverter. The controller is configured to: when a temperature of the target input terminal is greater than or equal to the temperature threshold, determine that a loose connection occurs at the target input terminal connected to the inverter. The first photovoltaic string is one or more photovoltaic modules in the plurality of photovoltaic strings. Similarly, when a temperature of an output terminal connected to a converter is greater than or equal to the temperature threshold, it is determined that a loose connection occurs at the terminal of the converter. For example, refer to FIG. 1 again. When a temperature of the output terminal 1 connected to the optimizer a1 is greater than or equal to the temperature threshold, the controller determines that a loose connection occurs at the output terminal 1. Further, when the controller determines that a loose connection occurs at the output terminal of the first optimizer included in the first photovoltaic string or that a loose connection occurs at the input terminal connected to the inverter, the controller controls currents transmitted by the plurality of first optimizers to the inverter to be reduced, thereby reducing a current on the loosely connected output terminal or input terminal, and avoiding an increase in a temperature of the loosely connected terminal. When the controller determines that a loose connection occurs at the output terminal connected to the converter or that a loose connection occurs at the input terminal connected to the converter, the controller controls a current between the converter and the input end of the inverter to be reduced, thereby reducing a current on the loosely connected output terminal or input terminal connected to the converter, and avoiding an increase in a temperature of the loosely connected terminal. For example, when a loose connection occurs at the output terminal 1 connected to the optimizer a1, the controller may control currents output by all the optimizers, that is, the optimizer a1, the optimizer a2, ..., and the optimizer am, in the photovoltaic string in which the optimizer a1 is located, to the inverter to be reduced. Herein, the controller may be in a communication connection with first controllers in the optimizer a1, the optimizer a2, ..., and the optimizer am, and send a control instruction to the first controllers in the optimizer a1, the optimizer a2, ..., and the optimizer am through the communication connection, and the first controllers in the optimizer a1, the optimizer a2, ..., and the optimizer am control a current output by a corresponding optimizer to the inverter to be reduced. Alternatively, the controller may control the inverter, so that an input current on the input terminal connected between the inverter and the optimizer a1, optimizer a2, ..., and optimizer am is reduced. Herein, the controller may be in a communication connection with a second controller in the inverter, and send a control instruction to the second controller in the inverter through the communication connection, and the second controller controls an input current on a corresponding input terminal to be reduced. Similarly, when a loose connection occurs at the input terminal connected to the inverter, for example, a loose connection occurs at the input terminal connected between the inverter and the optimizer a1, optimizer a2, ..., and optimizer am, the controller may control the inverter, for reduction of an input current on the input terminal at which the loose connection occurs, or control the optimizer a1, the optimizer a2, ..., and the optimizer am that are connected to the input terminal at which the loose connection occurs, for reduction of currents output by the optimizer a1, the optimizer a2, ..., and the optimizer am to the inverter. Herein, after determining that a loose connection occurs at a terminal in the power supply system, the controller controls a current between the optimizer corresponding to the loosely connected terminal and the input end of the inverter to be reduced, thereby reducing a current on a loosely connected output terminal or input terminal. In addition, a current flows normally between the photovoltaic module and the input end of the inverter with no loose connection at a terminal in the power supply system, avoiding an excessively high temperature of the loosely connected terminal, and reducing a loss of power generation of the power supply system, resulting in higher operation reliability of the power supply system.

In some feasible implementations, when a loose connection occurs at an output terminal of a first optimizer included in a first photovoltaic string in a plurality of photovoltaic strings, the controller may control a plurality of first optimizers included in the first photovoltaic string to shut down, thereby reducing a current on the loosely connected output terminal. When a loose connection occurs at an input terminal connected to the inverter, the controller may control a plurality of first optimizers in a first photovoltaic string connected to the input terminal at which the loose connection occurs to shut down, thereby reducing a current on the loosely connected input terminal. Refer to FIG. 1 again. When a loose connection occurs at the output terminal 1 connected to the optimizer a1, or when a loose connection occurs at the input terminal connected to the optimizer a1, the optimizer a2, ..., and the optimizer am, the controller may control all the optimizers in the photovoltaic string in which the optimizer a1 is located to shut down, that is, control the optimizer a1, the optimizer a2, ..., and the optimizer am to shut down, so that currents output by the optimizer a1, the optimizer a2, ..., and the optimizer am to the inverter are zero. Herein, a current between the photovoltaic string corresponding to the loosely connected terminal and the input end of the inverter is controlled to be reduced to zero, thereby reducing a current on the loosely connected output terminal or input terminal. In addition, a current flows normally between the photovoltaic module and the input end of the inverter with no loose connection at a terminal in the power supply system, avoiding an excessively high temperature of the loosely connected terminal, and reducing a loss of power generation of the power supply system.

In some feasible implementations, the controller in the power supply system may include a first controller and a second controller. The first controller is a controller in each optimizer in the photovoltaic string . The second controller is a controller in the inverter. In the plurality of first optimizers included in the first photovoltaic string in the plurality of photovoltaic strings, when a temperature of an output terminal connected to any first optimizer is greater than or equal to the temperature threshold, the first controller in the first optimizer determines that a loose connection occurs at the terminal, and sends information about the loose connection at the terminal to the second controller in the inverter through power line carrier communication. The information about the loose connection at the terminal may include a string number of the first photovoltaic string. Refer to FIG. 1 again. When a loose connection occurs at the output terminal corresponding to the optimizer a1, the first controller in the optimizer a1 may send information about the loose connection at the terminal to the second controller in the inverter. The information about the loose connection at the terminal may include a string number of the photovoltaic string in which the optimizer a1 is located. After receiving the information about the loose connection at the terminal, the second controller sends, based on the received string number of the photovoltaic string through power line carrier communication, an output current reduction instruction to the first controllers of the optimizer a1, the optimizer a2, ..., and the optimizer am in the corresponding photovoltaic string, so that the first controllers of the optimizer a1, the optimizer a2, ..., and the optimizer am control a current output by the corresponding optimizer to the inverter to be reduced. Alternatively, the second controller may control the inverter, so that an input current on the input terminal connected between the inverter and the optimizer a1, optimizer a2, ..., and optimizer am is reduced. In addition, when a loose connection occurs at the output terminal corresponding to the optimizer a1, the first controller in the optimizer a1 may further send, in a wired or wireless communication manner, an output current reduction instruction to the first controllers in the optimizer a2, ..., and the optimizer am, and the first controllers in the optimizer a2, ..., and the optimizer am control, based on the received output current reduction instruction, a current output by the corresponding optimizer to be reduced, thereby reducing a current on the loosely connected output terminal. Similarly, when a loose connection occurs at the input terminal connected to the inverter, for example, a loose connection occurs at the input terminal connected between the inverter and the optimizer a1, optimizer a2, ..., and optimizer am, the second controller in the inverter may control the inverter, for reduction of an input current on the input terminal at which the loose connection occurs, or send an output current reduction instruction to the first controllers in the optimizer a1, the optimizer a2, ..., and the optimizer am through power line carrier communication, for the first controllers in the optimizer a1, the optimizer a2, ..., and the optimizer am to control a current output by the corresponding optimizer to the inverter to be reduced, thereby reducing a current on the loosely connected input terminal or output terminal. In addition, a current flows normally between another photovoltaic module and the input end of the inverter in the power supply system, avoiding an excessively high temperature of the loosely connected terminal, and reducing a loss of power generation of the power supply system.

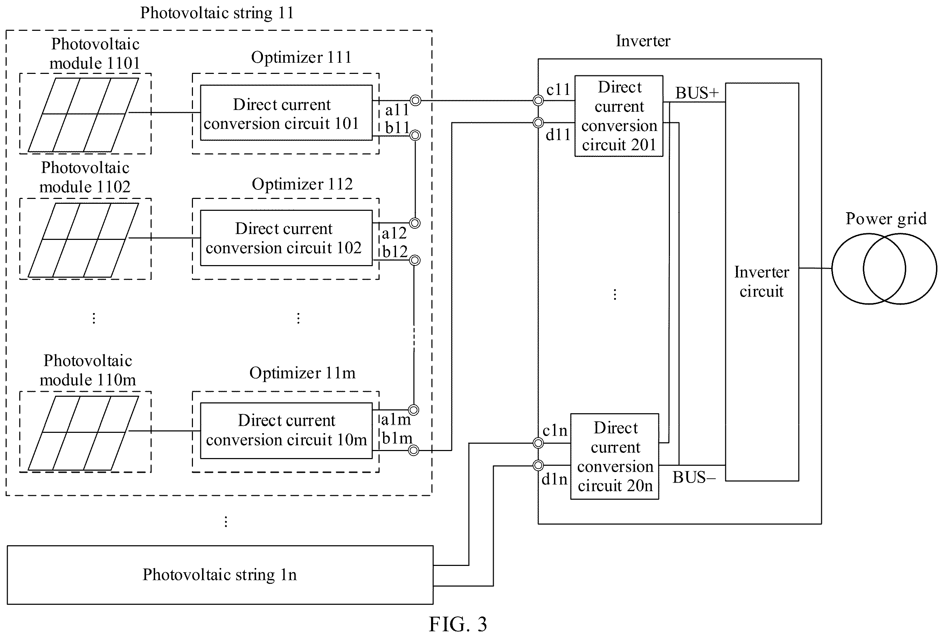

In some feasible implementations, each optimizer in a photovoltaic string includes a first direct current conversion circuit, an input end of the first direct current conversion circuit is configured to connect to a photovoltaic module, and an output end of the first direct current conversion circuit is configured to connect to an output terminal. When a loose connection occurs at the output terminal of any one of the first optimizers included in the first photovoltaic string, or when a loose connection occurs at the target input terminal connected to the plurality of first optimizers connected in series, the first controller in each first optimizer may control an output current of the first direct current conversion circuit in the corresponding first optimizer to be reduced. FIG. 3 is a diagram of a structure of a power supply system according to this application. The power supply system shown in FIG. 3 includes a plurality of photovoltaic strings, that is, a photovoltaic string 11, a photovoltaic string 12, ..., and a photovoltaic string 1n. The photovoltaic string 11 includes a total of m optimizers: an optimizer 111, an optimizer 112, ..., and an optimizer 11m. The optimizer 111, the optimizer 112, ..., and the optimizer 11m each include a first direct current conversion circuit and a first controller (not shown in FIG. 3), that is, respectively include a direct current conversion circuit 101, a direct current conversion circuit 102, ..., and a direct current conversion circuit 10m. Ends of the direct current conversion circuit 101, the direct current conversion circuit 102, ..., and the direct current conversion circuit 10m are respectively configured to connect to a photovoltaic module 1101, a photovoltaic module 1102, ..., and a photovoltaic module 110m. The other ends of the direct current conversion circuit 101, the direct current conversion circuit 102, ..., and the direct current conversion circuit 10m are each connected to an output terminal, and output terminals connected to the direct current conversion circuits in the plurality of optimizers are connected in series and then configured to connect to an input terminal connected to an input end of an inverter. It may be understood that connections of photovoltaic modules and optimizers in the photovoltaic string 12, ..., and the photovoltaic string 1n are the same as those in the photovoltaic string 11, and details are not described herein again. The photovoltaic string 11 is used as an example. When a loose connection occurs at the output terminal connected to the direct current conversion circuit 101 in the optimizer 111, first controllers in the optimizer 111, the optimizer 112, ..., and the optimizer 11m may respectively control actions of switch transistors in the direct current conversion circuit 101, the direct current conversion circuit 102, ..., and the direct current conversion circuit 10m, so that output currents of the direct current conversion circuit 101, the direct current conversion circuit 102, ..., and the direct current conversion circuit 10m are reduced, thereby reducing a current on the loosely connected output terminal, and avoiding an excessively high temperature of the loosely connected terminal. When a loose connection occurs at the input terminal connected to the photovoltaic string 11, the first controllers in the optimizer 111, the optimizer 112, ..., and the optimizer 11m may also respectively control actions of the switch transistors in the direct current conversion circuit 101, the direct current conversion circuit 102, ..., and the direct current conversion circuit 10m, so that output currents of the direct current conversion circuit 101, the direct current conversion circuit 102, ..., and the direct current conversion circuit 10m are reduced, thereby reducing a current on the loosely connected input terminal, and avoiding an excessively high temperature of the loosely connected terminal. In addition, a current flows normally between the photovoltaic module and the input end of the inverter with no loose connection at a terminal in the power supply system, reducing a loss of power generation of the power supply system.

In some feasible implementations, the inverter includes a plurality of second direct current conversion circuits and an inverter circuit, an input end of each second direct current conversion circuit is connected to an input terminal, output ends of the plurality of second direct current conversion circuits are connected in parallel and then connected to an input end of the inverter circuit, and an output end of the inverter circuit is configured to connect to a power grid or a load. When a loose connection occurs at the output terminal of any one of the first optimizers included in the first photovoltaic string, the second controller in the inverter may control an input current of the second direct current conversion circuit connected to the input terminal connected to the plurality of first optimizers to be reduced. When a loose connection occurs at the input terminal connected to the inverter, the second controller in the inverter may control reduction of an input current of the second direct current conversion circuit connected to the input terminal at which the loose connection occurs. Refer to FIG. 3 again. In the power supply system shown in FIG. 3, the inverter includes a plurality of second direct current conversion circuits, that is, includes a total of n direct current conversion circuits: a direct current conversion circuit 201, a direct current conversion circuit 202, ..., and a direct current conversion circuit 20n, and includes an inverter circuit and a second controller (not shown in FIG. 3). Input ends of the direct current conversion circuit 201, the direct current conversion circuit 202, ..., and the direct current conversion circuit 20n are each connected to an input terminal. The input terminal connected to the direct current conversion circuit 201 is connected to the output terminals connected to the plurality of optimizers in the photovoltaic string 11, the input terminal connected to the direct current conversion circuit 202 is connected to output terminals connected to a plurality of optimizers in the photovoltaic string 12, and so on. Output ends of the direct current conversion circuit 201, the direct current conversion circuit 202, ..., and the direct current conversion circuit 20n are connected in parallel and then connected to an input end of the inverter circuit by a positive direct current bus BUS+ and a negative direct current bus BUS-. An output end of the inverter circuit is configured to connect to a power grid or a load. The direct current conversion circuit 201 is used as an example. When a loose connection occurs at the input terminal connected to the direct current conversion circuit 201, the second controller may control an action of a switch transistor in the direct current conversion circuit 201, so that an input current of the direct current conversion circuit 201 is reduced, thereby reducing a current on the loosely connected input terminal. Alternatively, when a loose connection occurs at the output terminal connected to any optimizer in the photovoltaic string 11, the second controller may control an action of a switch transistor in the direct current conversion circuit 201, so that an input current of the direct current conversion circuit 201 is reduced, thereby reducing a current on the loosely connected output terminal, and avoiding an excessively high temperature of the loosely connected terminal. In addition, a current flows normally between the photovoltaic module and the input end of the inverter with no loose connection at a terminal in the power supply system, reducing a loss of power generation of the power supply system.

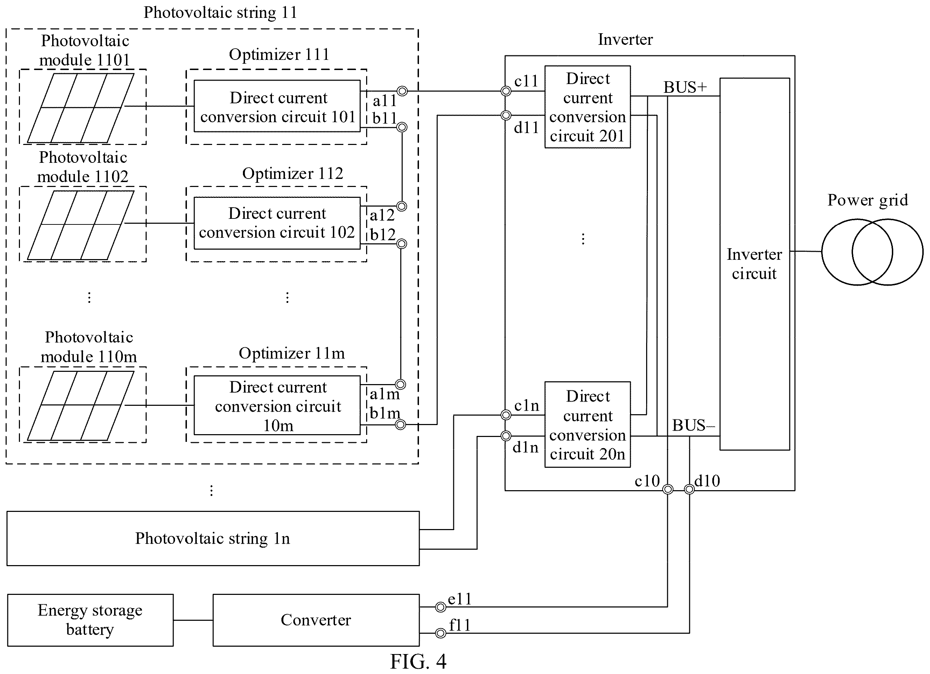

In some feasible implementations, the output terminal connected to each optimizer includes a positive-electrode output terminal and a negative-electrode output terminal, and the input terminal connected to the inverter includes a positive-electrode input terminal and a negative-electrode input terminal. In a plurality of optimizers in any photovoltaic string, a positive-electrode output terminal of an optimizer is connected to a negative-electrode output terminal of another optimizer or is connected to a positive-electrode input terminal, and a negative-electrode output terminal of an optimizer is connected to a positive-electrode output terminal of another optimizer or is connected to a negative-electrode input terminal. Refer to FIG. 3 again. In the power supply system shown in FIG. 3, the photovoltaic string 11 is used as an example. The output terminal of the optimizer 111 included in the photovoltaic string 11 includes a positive-electrode output terminal a11 and a negative-electrode output terminal b11, the output terminal of the optimizer 112 includes a positive-electrode output terminal a12 and a negative-electrode output terminal b12, and the output terminals connected to the optimizer 113 to the optimizer 11m also include positive-electrode output terminals and negative-electrode output terminals. Details are not described herein again. Similarly, in the plurality of input terminals connected to the inverter, the input terminal correspondingly connected to the photovoltaic string 11 includes a positive-electrode input terminal c11 and a negative-electrode input terminal d11, and the other input terminals also include positive-electrode input terminals and negative-electrode input terminals. Details are not described herein again. Specifically, in the photovoltaic string 11, the positive-electrode output terminal a11 of the optimizer 111 is connected to the positive-electrode input terminal c11, the negative-electrode output terminal b11 of the optimizer 111 is connected to the positive-electrode output terminal a12 of the optimizer 112, the negative-electrode output terminal b12 of the optimizer 112 is connected to the positive-electrode output terminal a13 of the optimizer 113 (not shown in FIG. 3), and so on. In the optimizer 113 to the optimizer 11m, the positive-electrode output terminal of an optimizer is connected to the negative-electrode output terminal of another optimizer, the negative-electrode output terminal of an optimizer is connected to the positive-electrode output terminal of another optimizer, and the negative-electrode output terminal blm of the optimizer 11m is connected to the negative-electrode input terminal d11. It may be understood that, for connection manners of other photovoltaic strings and the inverter, refer to the description of the photovoltaic string11. Details are not described herein again. When the inverter and the optimizer of each photovoltaic module are in normal operation, a current flows through a terminal connected between the inverter and each photovoltaic module. When a temperature of the positive-electrode output terminal or the negative-electrode output terminal of the first optimizer included in the first photovoltaic string is greater than or equal to the temperature threshold, or when a temperature of the positive-electrode input terminal or the negative-electrode input terminal of the inverter is greater than or equal to the temperature threshold, currents transmitted by the plurality of first optimizers to the inverter are reduced. For example, when a temperature of the positive-electrode output terminal a11 of the optimizer 111 is greater than or equal to the temperature threshold, that is, it is determined that a loose connection occurs at the positive-electrode output terminal a11, the first controllers in the optimizer 111 and in other optimizers connected in series to the optimizer 111 may control currents between all the optimizers in the photovoltaic string 11 and the input end of the inverter to be reduced, or the second controller in the inverter may control currents between all the optimizers in the photovoltaic string 11 and the input end of the inverter to be reduced. For a specific control process, refer to the foregoing description of FIG. 3. When a temperature of the positive-electrode input terminal c11 connected to the inverter is greater than or equal to the temperature threshold, that is, it is determined that a loose connection occurs at the positive-electrode input terminal c11, the first controllers in the optimizer 111 and in other optimizers connected in series to the optimizer 111 may control currents between the photovoltaic string 11 and the input end of the inverter to be reduced, or the second controller in the inverter may control currents between all the optimizers in the photovoltaic string 11 and the input end of the inverter to be reduced. For a specific control process, refer to the foregoing description of FIG. 3. Herein, a specific control manner may include one of controlling each optimizer in the photovoltaic string 11 to shut down, controlling an output current of each optimizer in the photovoltaic string 11 to be reduced, and controlling an input current of the direct current conversion circuit 201 in the inverter to be reduced. The power supply system shown in FIG. 3 may further include an energy storage battery and a converter. FIG. 4 is a diagram of another structure of a power supply system according to this application. The power supply system shown in FIG. 4 includes a plurality of photovoltaic strings and an energy storage battery. For a structure of each photovoltaic string, refer to the description of FIG. 3. In the power supply system, one end of a converter is configured to connect to the energy storage battery, and the other end of the converter is configured to connect to an output terminal, and is connected, by the output terminal, to an input terminal connected to the input end of the inverter. Specifically, the output terminal connected to the converter may include a positive-electrode output terminal e11 and a negative-electrode output terminal f11, and the input terminal correspondingly connected to the output terminal also includes a positive-electrode input terminal c10 and a negative-electrode input terminal d10. The positive-electrode input terminal c10 and the negative-electrode input terminal d10 are respectively connected to a positive direct current bus BUS+ and a negative direct current bus BUS- in the inverter, and the positive-electrode input terminal c10 and the negative-electrode input terminal d10 are respectively connected to the positive-electrode output terminal e11 and the negative-electrode output terminal f11. When a loose connection occurs at the output terminal connected to the converter, or when a loose connection occurs at the input terminal correspondingly connected to the output terminal, a controller in the converter may control a power conversion circuit in the converter, so that an output current of the converter is reduced, thereby reducing a current on the loosely connected output terminal or input terminal, and avoiding an excessively high temperature of the loosely connected terminal.

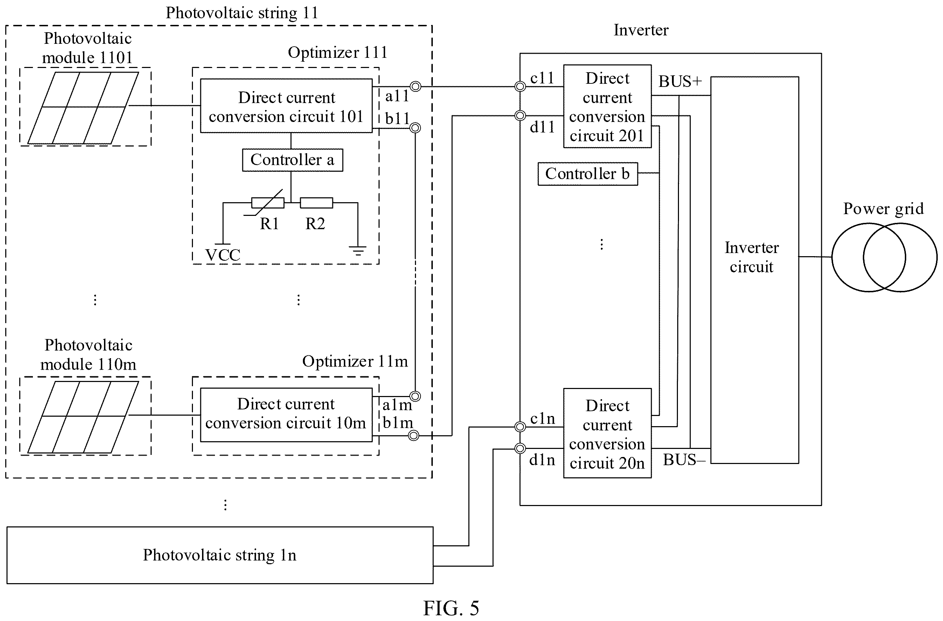

In some feasible implementations, the optimizer includes a thermistor, and when a temperature of the output terminal connected to the optimizer is greater than or equal to the temperature threshold, a resistance value of the thermistor reaches a target resistance value. FIG. 5 is a diagram of another structure of a power supply system according to this application. The power supply system shown in FIG. 5 includes a plurality of photovoltaic strings and an energy storage battery. For a structure of each photovoltaic string and a structure of an inverter, refer to the description of FIG. 3. The optimizer includes a thermistor. One optimizer may correspond to one thermistor, or a positive-electrode output terminal and a negative-electrode output terminal that are connected to an optimizer may each correspond to one thermistor. An example in which one optimizer corresponds to one thermistor is used. For example, the optimizer 111 in the photovoltaic string 11 includes a direct current conversion circuit 101 and a controller a, and further includes a thermistor R1 and a resistor R2 that are connected in series. A location of the thermistor R1 may be close to the positive-electrode output terminal a11 and the negative-electrode output terminal b11 of the optimizer 111. Two ends of the thermistor R1 and the resistor R2 that are connected in series are connected in parallel to a direct current power supply. When a loose connection occurs at the output terminal connected to the direct current conversion circuit 101, temperatures of the positive-electrode output terminal a11 and the negative-electrode output terminal b11 are greater than or equal to the temperature threshold, so that a resistance value of the thermistor R1 changes. An example in which the thermistor R1 is a negative thermistor is used. When a temperature increases, the resistance value of the thermistor R1 decreases. When the temperatures of the positive-electrode output terminal a11 and the negative-electrode output terminal b11 are greater than or equal to the temperature threshold, and the resistance value of the thermistor R1 decreases and reaches the target resistance value, a voltage at two ends of the thermistor R1 decreases. When the first controller, that is, the controller a, in the optimizer 111 detects that the voltage at two ends of the thermistor R1 decreases to a voltage threshold, it is determined that a loose connection occurs at the positive-electrode output terminal a11 or the negative-electrode output terminal b11. The controller a may control a current between the photovoltaic string 11 and the input end of the inverter to be reduced. It may be understood that the thermistor R1 may alternatively be a positive thermistor or another type of thermistor. This may be specifically determined according to an actual application scenario, and is not limited herein. Herein, a specific control manner may include one of controlling each optimizer in the photovoltaic string 11 to shut down, controlling an output current of each optimizer in the photovoltaic string 11 to be reduced, and controlling an input current of the direct current conversion circuit 201 in the inverter to be reduced, thereby reducing a current on the loosely connected output terminal, and avoiding an excessively high temperature of the loosely connected terminal. For a specific control process, refer to the description of FIG. 3. It may be understood that a thermistor included in an optimizer in another photovoltaic module is similar to that in the optimizer 111, and details are not described herein again.

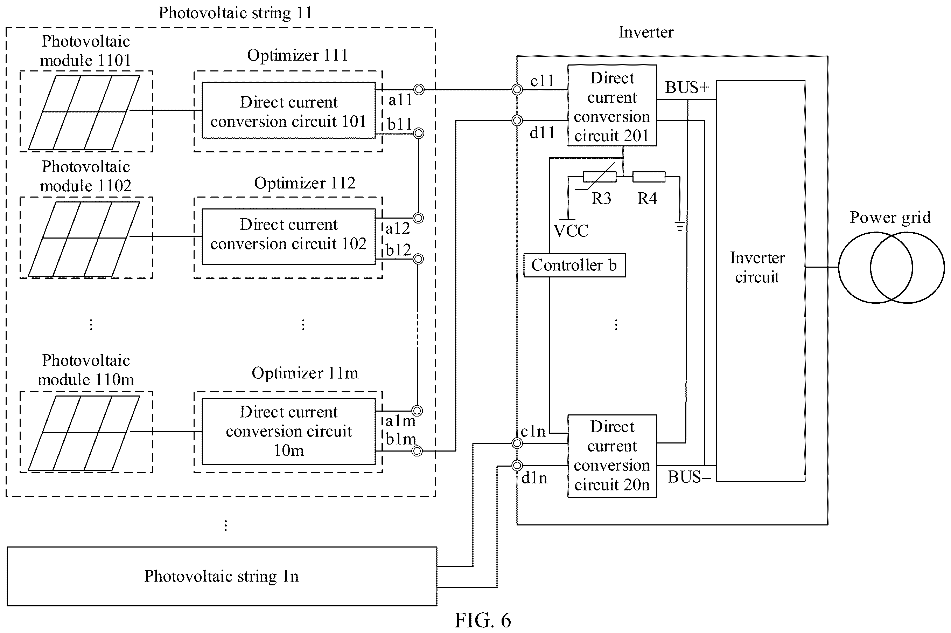

In some feasible implementations, the inverter includes a thermistor, and when a temperature of the input terminal connected to the inverter is greater than or equal to the temperature threshold, a resistance value of the thermistor reaches a target resistance value. FIG. 6 is a diagram of another structure of a power supply system according to this application. The power supply system shown in FIG. 6 includes a plurality of photovoltaic strings and an energy storage battery. For a structure of each photovoltaic string and a structure of an inverter, refer to the description of FIG. 3. The inverter includes a thermistor. An example in which one direct current conversion circuit corresponds to one thermistor is used. For example, the direct current conversion circuit 201 is connected to a thermistor R3 and a resistor R4 that are connected in series. A location of the thermistor R3 may be close to the positive-electrode input terminal c11 and the negative-electrode input terminal d11. Two ends of the thermistor R3 and the resistor R4 that are connected in series are connected in parallel to a direct current power supply. When a loose connection occurs at the output terminal connected to the direct current conversion circuit 201, temperatures of the positive-electrode output terminal a11 and the negative-electrode output terminal b11 are greater than or equal to the temperature threshold, so that a resistance value of the thermistor R3 changes. An example in which the thermistor R3 is a negative thermistor is used. When the second controller, that is, the controller b, in the inverter detects that the voltage at two ends of the thermistor R3 decreases to a voltage threshold, it is determined that a loose connection occurs at the positive-electrode input terminal c11 or the negative-electrode input terminal d11. The controller b may control a current between the photovoltaic string 11 and the input end of the inverter to be reduced. It may be understood that the thermistor R3 may alternatively be a positive thermistor or another type of thermistor. This may be specifically determined according to an actual application scenario, and is not limited herein. Herein, a specific control manner may include one of controlling each optimizer in the photovoltaic string 11 to shut down, controlling an output current of each optimizer in the photovoltaic string 11 to be reduced, and controlling an input current of the direct current conversion circuit 201 in the inverter to be reduced, thereby reducing a current on the loosely connected output terminal, and avoiding an excessively high temperature of the loosely connected terminal. For a specific control process, refer to the description of FIG. 3. It may be understood that a thermistor connected to another direct current conversion circuit is similar to that connected to the direct current conversion circuit 201, and details are not described herein again.

## Claims

1. A power supply system, wherein the power supply system comprises an inverter and a plurality of optimizers; an output end of the optimizer is connected to an output terminal, and an input end of the optimizer is configured to connect to at least one photovoltaic module; and
an input end of the inverter is connected to a plurality of input terminals, and the input terminal is connected to the output terminal, wherein
the plurality of optimizers comprise a plurality of first optimizers, and the plurality of first optimizers are connected in series and then connected to a target input terminal in the plurality of input terminals; and
when a temperature of the output terminal connected to any one of the plurality of first optimizers is greater than or equal to a temperature threshold, or when a temperature of the target input terminal is greater than or equal to the temperature threshold, currents transmitted by the plurality of first optimizers to the inverter are reduced.

2. The power supply system according to claim 1, wherein the first optimizer comprises a first controller, and the inverter comprises a second controller;
a first controller of any one of the plurality of first optimizers is configured to: when the temperature of the output terminal connected to the first optimizer is greater than or equal to the temperature threshold, send information about a loose connection at the output terminal to the second controller through power line carrier communication;
the second controller is configured to: after receiving the information about the loose connection at the output terminal through power line carrier communication, control the currents transmitted by the plurality of first optimizers to the inverter to be reduced, or send an output current reduction instruction to the first controller in each of the first optimizers through power line carrier communication, for the first controller in each of the first optimizers to control, after receiving the output current reduction instruction, a current transmitted by each of the first optimizers to the inverter to be reduced; and
the second controller is further configured to: when the temperature of the target input terminal is greater than or equal to the temperature threshold, control the currents transmitted by the plurality of first optimizers to the inverter to be reduced.

3. The power supply system according to claim 2, wherein the first optimizer comprises a first direct current conversion circuit; and
that the currents transmitted by the plurality of first optimizers to the inverter are reduced comprises that:
in each of the first optimizers, the first controller adjusts a switching action of a switch transistor of the first direct current conversion circuit, for the current transmitted by each of the first optimizers to the inverter to be reduced.

4. The power supply system according to claim 2, wherein the inverter comprises an inverter circuit and a plurality of second direct current conversion circuits, and output ends of the plurality of second direct current conversion circuits are connected in parallel and then connected to an input end of the inverter circuit; and
that the currents transmitted by the plurality of first optimizers to the inverter are reduced comprises that:
the second controller adjusts a switching action of a switch transistor of the second direct current conversion circuit that is in the plurality of second direct current conversion circuits and that is connected to the target input terminal, for reduction of the currents transmitted by the plurality of first optimizers to the inverter.

5. The power supply system according to any one of claims 1 to 4, wherein the optimizer comprises a thermistor, and the thermistor is located at the output end of the optimizer; and
when a resistance value of the thermistor reaches a target resistance value, a temperature of the output terminal connected to the optimizer is greater than or equal to the temperature threshold.

6. The power supply system according to any one of claims 1 to 4, wherein the inverter comprises a thermistor, and the thermistor is located at the input end of the inverter; and
when a resistance value of the thermistor reaches a target resistance value, a temperature of the input terminal connected to the inverter is greater than or equal to the temperature threshold.

7. The power supply system according to any one of claims 1 to 6, wherein that the currents transmitted by the plurality of first optimizers to the inverter are reduced comprises that:
the currents transmitted by the plurality of first optimizers to the inverter are reduced to 0.
